# EUROPÄISCHE PATENTANMELDUNG

(11) **EP 1 020 407 A2**
(43) Veröffentlichungstag der Anmeldung: **19.07.2000**
(21) Anmeldenummer: 00100388.8
(22) Anmeldetag: 08.01.2000
(51) Int. Cl.: C02F 1/44, C02F 1/58

(54) **Verfahren zur Trennung von ammoniumnitrathaltigem Kondensat-Abwasser in zwei wiederverwendbare flüssige Anteile**

(30) Priorität: 16.01.1999 DE 19901571
(71) Anmelder: Uwatech Umwelt- und Wassertechnik GmbH, 29336 Nienhagen (DE)
(72) Erfinder: Kohlheb, Robert, Dr., 29336 Nienhagen (DE); Hancz, Peter, 9022 Györ (HU); Switalski, Ryszard, 33-100 Tarnow (PL); Piwowarski, Stanislaw, 33-101 Tarnow (PL); Prokuski Franciszek, 33-100 Tarnow (PL); Koziol Tomasz, 33-102 Tarnow (PL); Noworyta Dr. Andrzej, 54-112 Wroclaw (PL)
(74) Vertreter: König, Norbert

(57) **Zusammenfassung**

Ein Verfahren zur Trennung von ammoniumnitrathaltigem Kondensat-Abwasser aus einer Verdampferanlage in zwei wiederverwendbare Anteile ist dadurch gekennzeichnet, daß das Kondensat-Abwassers in eine Konzentratlösung und Permeat in einer ersten Umkehrosmose-Stufe getrennt wird, daß das Permeat der ersten Umkehrosmose-Stufe einer zweiten Umkehrosmose-Stufe zugeführt wird und in dieser Umkehrosmose-Stufe in als Prozeßwasser wiederverwendbares Permeat und in Konzentratlösung getrennt wird, die dem der ersten Umkehrosmose-Stufe zugeführten Kondensat-Abwasser wieder zugegeben wird, und daß die Konzentratlösung der ersten Umkehrosmose-Stufe einer dritten Umkehrosmose-Stufe zugeführt wird und in Permeat, das dem der ersten Umkehrosmose-Stufe zugeführten Kondensat-Abwasser zugegeben wird, und in Konzentratlösung getrennt wird, die zur Verdampferanlage zurückgeleitet wird.

## Beschreibung

Die Erfindung betrifft ein Verfahren zur Trennung von ammoniumnitrathaltigem Kondensat-Abwasser aus einer Verdampferanlage in zwei wiederverwendbare flüssige Anteile.

Es ist bekannt, zur Aufbereitung von Abwasser Ionenaustauscher einzusetzen, für die synthetische Harze verwendet werden. Der Grad der Eliminierung eines Ions durch ein Austauscherharz hängt vor allem von folgenden Faktoren ab: Kontaktzeit, Anzahl der Ladungen sowie Basizität des Ions. Nachteilig ist, daß sich die Kapazität des Austauschers allmählich erschöpft, der daher regeneriert werden muß. Nachteilig ist ferner der stets auftretende Abrieb der Harze.

Ferner ist es bekannt, die Verdampfung als thermisches Trennverfahren in der Abwassertechnik einzusetzen, wobei in der Regel mehrstufige Verdampfer-Anlagen verwendet werden. Nachteilig ist der große apparative Aufwand und Energiebedarf.

Die Aufgabe der vorliegenden Erfindung besteht darin, ein neuartiges Verfahren zur Trennung von ammoniumnitrathaltigem Kondensat-Abwasser aus einer Verdampferanlage in zwei wiederverwendbare flüssige Anteile anzugeben, das geringen apparativen Aufwand und geringen Energiebedarf benötigt.

Diese Aufgabe wird durch die Erfindung gemäß Anspruch 1 gelöst.

Vorteilhafte und zweckmäßige Weiterbildungen der Aufgabenlösung sind in den Unteransprüchen angegeben.

Die erfindungsgemäße Lösung nutzt die Umkehrosmose-Trenntechnik, bei der die Bewegung der Lösungsmittel-Moleküle in der Richtung erfolgt, die derjenigen der normalen Osmose entgegengesetzt ist. Voraussetzung dafür ist grundsätzlich jedoch die Anwendung eines hydrostatischen Druckes, der den osmotischen Druck wesentlich übersteigt.

Die Erfindung schlägt ein dreistufiges Verfahren mit drei Umkehrosmose-Anlagen vor, zwischen denen keine Behälter zur Zwischenlagerung eingesetzt werden, wodurch der Druck des strömenden Konzentrats nur geringfügig oder gar nicht abgebaut wird, so daß der sonst notwendige Aufwand für Druckab- und -aufbau verringert oder vermieden ist. Das erfindungsgemäße Verfahren arbeitet sehr wirtschaftlich.

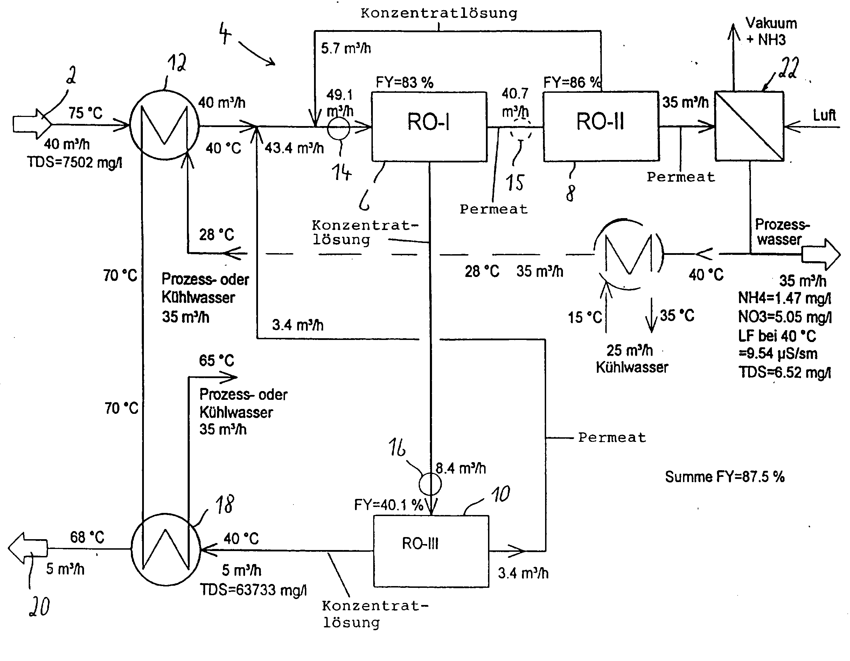

Die Erfindung soll nachfolgend anhand der beigefügten Zeichnung, die ein Blockschaltbild des Verfahrensablaufes zeigt, näher erläutert werden.

Ammoniumnitrathaltiges Kondensat-Abwasser 2 aus einer Verdampferanlage (nicht dargestellt) beispielsweise eines Chemiewerkes wird einer Umkehrosmose-Trennanlage 4 mit drei Umkehrosmose-Stufen 6, 8, 10 zugeführt, und zwar zunächst der ersten Umkehrosmose-Stufe 6, aus der das Permeat direkt in die zweite Umkehrosmose-Stufe 8 strömt. Die Konzentratlösung der ersten Umkehrosmose-Stufe 6 wird der dritten Umkehrosmose-Stufe 10 zugeführt. Die Konzentratlösung der zweiten Umkehrosmose-Stufe 8 wird zur ersten Umkehrosmose-Stufe 6 zurückgeführt. Das Permeat der zweiten Umkehrosmose-Stufe 8 ist als Prozeßwaser wieder-verwendbar und stellt den ersten wiederverwendbaren Anteil dar. Das Permeat der dritten Umkehrosmose-Stufe 10 wird zur ersten Umkehrosmose-Stufe 6 zurückgeführt, während die Konzentratlösung der dritten Umkehrosmose-Stufe 10 als der zweite wiederverwendbare flüssige Anteil zurück in die Verdampferanlage geleitet wird.

Bei der beschriebenen Kaskadenschaltung der drei Umkehrosmose-Stufen 6, 8 und 10 wird der Druck des strömenden Konzentrats nur teilweise abgebaut, so daß nur geringfügige Druckerhöhungen vor den einzelnen Umkehrosmose-Stufen vorgenommen werden müssen, was nachfolgend anhand eines Beispieles noch näher erläutert wird. Dies wird im wesentlichen dadurch erreicht, daß zwischen den einzelnen Umkehrosmose-Stufen keine Behälter zur Zwischenlagerung eingesetzt werden, sondern eine direkte Zu- und Zurückführung von einer Stufe auf die andere Stufe mit Hilfe unterschiedlicher Regelarmaturen vorgesehen ist.

Nachfolgend soll anhand der beigefügten Zeichnung ein Beispiel eines Prozeßverlaufes für eine Betriebstemperatur von 40°C angegeben werden:

Das ammoniumnitrathaltige Kondensat-Abwasser 2 wird mit einer Temperatur von ca. 75°C und mit einer Zulaufmenge von ca. 40 m³/h der Umkehrosmose-Anlage 4 zugeführt, in einem Wärmetauscher 12 auf ca. 40°C abgekühlt und der ersten Umkehrosmose-Stufe 6 zugeführt, wobei der Menge von 40 m³/h noch Konzentratlösung der zweiten Umkehrosmose-Stufe 8 in einer Menge von ca. 5,7 m³/h und Permeat aus der dritten Umkehrosmose-Stufe 10 in einer Menge von ca. 3,4 m³/h hinzugeführt werden, so daß insgesamt der ersten Umkehrosmose-Stufe ca. 49,1 m³/h zugeführt werden. Das der ersten Umkehrosmose-Stufe 6 zugeführte Medium wird mit einem Druck von 40 - 120 bar, vorzugsweise 40 - 70 bar, beispielsweise 45 bar zugeführt, welcher durch eine Pumpe 14 erzeugt wird. Ca. 40,7 m³/h Permeat aus der ersten Umkehrosmose-Stufe 6 wird der zweiten Umkehrosmose-Stufe 8 mit einem Druck von 10 - 70 bar, vorzugsweise 10 - 40 bar, beispielsweise 12 bar zugeführt, wozu gegebenenfalls eine Pumpe 15 eingesetzt wird, und ca. 8,4 m³/h Konzentratlösung der ersten Umkehrosmose-Stufe 6 strömt aus dieser Stufe mit einem Druck von ca. 40 bar bei dem angenommenem Zuführdruck von 45 bar aus und wird mittels einer Druckerhöhungspumpe 16 mit einem Druck von 40 - 120 bar, vorzugsweise 40 - 70 bar, bei dem Beispiel von ca. 60 bar der dritten Umkehrosmose-Stufe 10 zugeführt. Aus der zweiten Umkehrosmose-Stufe 8 strömt ca. 35 m³/h Permeat aus, das als Prozeßwasser wiederverwendbar ist und den ersten wiederverwendbaren flüssigen Anteil darstellt. Aus der dritten Umkehrosmose-Stufe 10 strömt die Konzentratlösung in einer Menge von ca. 5 m³/h bei einer Temperatur von etwa 40°C aus und stellt den zweiten wiederverwendbaren flüssigen Anteil dar, der in einem Wärmeaustauscher auf eine Temperatur von ca. 65°C - 68°C aufgewärmt wird und dann der Verdampferanlage wieder zugeführt wird.

Die Temperaturabsenkung des Kondensat-Abwassers von 75°C auf 40°C kann, wie dies gestrichelt in der Zeichnung angedeutet ist, mit Hilfe des Prozeßwassers (Permeat) aus der zweiten Umkehrosmose-Stufe 8 erfolgen, das vorher in einem Wärmeaustauscher auf ca. 28°C abgekühlt wird. Dieses abgekühlte Prozeßwasser verläßt den Wärmeaustauscher 12 mit einer Temperatur von ca. 70°C und wird dazu verwendet, in einem Wärmeaustauscher 18 die Temperatur der Konzentratlösung der dritten Umkehrosmose-Stufe 10 von ca. 40°C auf ca. 65°C - 68°C zu erwärmen. Die erwärmte Konzentratlösung 20 der dritten Umkehrosmose-Stufe 10 wird somit der Verdampferanlage mit sehr geringem Wärmeverlust wieder zugeführt. Aus dem Wärmeaustauscher 18 tritt das Prozeßwasser in einer Menge von ca. 35 m³/h mit einer Temperatur von ca. 60°C - 65°C aus und kann weiterverwendet werden.

Wenn das Kondensat-Abwasser 2 mit einer Menge von gelösten Feststoffen TDS = 7.502 mg/l in die Umkehrosmose-Anlage 4 einströmt, erfolgt durch das Verfahren gemäß obigem Beispiel eine Aufkonzentrierung im Konzentrat der dritten Umkehrosmose-Stufe 10 auf eine Menge von TDS = 63.733 mg/l, wie dies in der Zeichnung mit eingetragen ist.

Man erkennt, daß die Konzentratlösung der dritten Umkehrosmose-Stufe eine Aufkonzentrierung von gelösten Feststoffen um mehr als das 8fache gegenüber dem zugeführten Kondensat-Abwasser aufweist. Damit kann sie dem Verdampfungsprozeß wieder zugeführt werden.

Bei dem beschriebenen Beispiel verarbeitet die Umkehrosmose-Anlage 4 mit den drei Umkehrosmose-Stufen das Kondensat-Abwasser 2 mit einer Ausbeute FY von 87,5 %, wobei die Ausbeute FY der ersten Stufe 83 %, der zweiten Stufe 86 % und der dritten Stufe 40,1 % beträgt.

Die nachfolgende Tabelle zeigt die Analysedaten eines zugeführten Kondensat-Abwassers und des aus der dreistufigen Umkehrosmose-Anlage ausfließenden Konzentrats und Permeats, wobei die erste Stufe mit RO-I, die zweite Stufe mit RO-II und die dritte Stufe mit RO-III bezeichnet ist. Das zugeführte Kondensat-Abwasser ist mit Feed bezeichnet.

| Benennung | FEED | | RO-I | | RO-II | | RO-III | |
|---|---|---|---|---|---|---|---|---|
| mg/l Ion | Zulauf | Mix | Konz. | Perm. | Konz. | Perm. | Konz. | Perm. |
| Calzium | 0,6 | 0,5 | 3,1 | 0,0 | 0,1 | 0,0 | 5,1 | 0,1 |
| Magnesium | 0,5 | 0,4 | 2,5 | 0,0 | 0,1 | 0,0 | 4,1 | 0,1 |
| Ammonium | 1687,0 | 1541,6 | 8727,0 | 60,8 | 427,9 | 1,5 | 14330,8 | 515,2 |
| Nitrat | 5813,0 | 5311,8 | 30071,1 | 209,5 | 1474,5 | 5,0 | 49380,3 | 1775,3 |
| Bicarbonat | 1,2 | 1,1 | 6,3 | 0,0 | 0,2 | 0,0 | 10,4 | 0,3 |
| Silikat | 0,3 | 0,3 | 1,5 | 0,0 | 0,0 | 0,0 | 2,5 | 0,0 |
| Freies CO₂ | 0,0 | 0,0 | 0,0 | 0,0 | 0,0 | 0,0 | 0,1 | 0,1 |
| Total Ion | 7502,6 | 6855,7 | 38811,4 | 270,4 | 1902,8 | 6,5 | 63733,3 | 2291,0 |
| pH | 7,7 | 7,7 | 8,3 | 6,3 | 7,1 | 4,6 | 7,8 | 6,5 |

Aus der Tabelle ist zu ersehen, daß mit der beschriebenen dreistufigen Umkehrosmose-Anlage eine optimale Konzentrat- und Permeatverteilung und Ausbeute erreicht wird.

Das zugeführte Kondensat-Abwasser kann noch mit restlichen Ammoniakgasen kontaminiert sein. Diese Ammoniakgase können aus dem Permeat der zweiten Umkehrosmose-Stufe 8 mit Hilfe eines Membrankontaktors 22 entfernt werden, wobei die für die Ammoniakgas-Extraktion notwendige Belüftung durch einen Linearkompressor bewirkt werden kann.

Für eine gute Retention in den einzelnen Umkehrosmose-Stufen 6, 8 und 10 wird der pH-Wert des zugeführten Kondensat-Abwassers 2 auf einen Wert von 6 - 7,5 eingestellt. Liegt der Ausgangs-pH-Wert des Kondensat-Abwassers höher als 7,5 erfolgt die Einstellung mit Salpetersäure, liegt der Ausgangswert unter 6 erfolgt die Einstellung mit Ammoniak.

## Patentansprüche

1. Verfahren zur Trennung von ammoniumnitrathaltigem Kondensat-Abwasser aus einer Verdampferanlage in zwei wiederverwendbare Anteile, **gekennzeichnet durch** folgende Verfahrensschritte:
- Trennung des Kondensat-Abwassers in eine Konzentratlösung und Permeat in einer ersten Umkehrosmose-Stufe,
- Zuführung des Permeats der ersten Umkehrosmose-Stufe zu einer zweiten Umkehrosmose-Stufe und Trennung des Permeats in der zweiten Umkehrosmose-Stufe in als Prozeßwasser wiederverwendbares Permeat und in Konzentratlösung, die dem der ersten Umkehrosmose-Stufe zugeführten Kondensat-Abwasser zugegeben wird, und
- Zuführung der Konzentratlösung der ersten Umkehrosmose-Stufe zu einer dritten Umkehrosmose-Stufe und Trennung der Konzentratlösung in der dritten Umkehrosmose-Stufe in Permeat, das dem der ersten Umkehrosmose-Stufe zugeführten Kondensat-Abwasser zugegeben wird, und in Konzentratlösung, die zur Verdampferanlage zurückgeleitet wird.

2. Verfahren nach Anspruch 1, **dadurch gekennzeichnet,** daß
- das aus dem Kondensat-Abwasser, der Konzentratlösung der zweiten Umkehrosmose-Stufe und dem Permeat der dritten Umkehrosmose-Stufe bestehende Medium mit einem Druck von 40 - 120 bar, vorzugsweise 40 - 70 bar, der ersten Umkehrosmose-Stufe zugeführt wird,
- das Permeat der ersten Umkehrosmose-Stufe der zweiten Umkehrosmose-Stufe mit einem Druck von 10 - 70 bar, vorzugsweise 10 - 40 bar, zugeführt wird und
- die Konzentratlösung der ersten Umkehrosmose-Stute der dritten Umkehrosmose-Stufe mit einem Druck von 40 - 120 bar, vorzugsweise 40 - 70 bar, zugeführt wird.

3. Verfahren nach Anspruch 1 oder 2, **dadurch gekennzeichnet,** daß die Temperatur des Kondensat-Abwassers in einem ersten Wärmetauscher auf ca. 40°C eingestellt wird, wobei zur Einstellung der Temperatur dem Wärmetauscher das vorher abgekühlte Permeat der zweiten Umkehrosmose-Stufe als Kühlmittel zugeführt wird, und daß das im ersten Wärmeaustauscher erwärmte Kühlmittel zur Aufheizung der der Verdampfungsanlage zugeführten Konzentratlösung der dritten Umkehrosmose-Stufe in einem zweiten Wärmetauscher auf ca. 65°C - 68°C verwendet wird.

4. Verfahren nach einem der vorhergehenden Ansprüche, **dadurch gekennzeichnet,** daß das Kondensat-Abwasser auf einen pH-Wert von 6 - 7,5 eingestellt.

5. Verfahren nach Anspruch 4, **dadurch gekennzeichnet,** daß bei einem Ausgangs-pH-Wert des Kondensat-Abwassers > 7,5 Salpetersäure und bei einem Ausgangs-pH-Wert < 6 Ammoniak zur Einstellung des pH-Wertes zugegeben wird.
